# EUROPEAN PATENT APPLICATION

(11) **EP 4 488 519 A1**
(43) Date of publication of application: **08.01.2025**
(21) Application number: 22929981.3
(22) Date of filing: 27.12.2022
(51) Int. Cl.: F04B 39/00, F04C 29/00, F04D 29/00

(54) **COMPRESSOR AND REFRIGERATION CYCLE APPARATUS**

(30) Priority: 03.03.2022 JP 2022032903
(71) Applicant: DAIKIN INDUSTRIES, LTD., Osaka-shi, Osaka 530-0001 (JP)
(72) Inventor: KOJIMA, Koji, Osaka-shi, Osaka 530-001 (JP); OKAMURA, Yuta, Osaka-shi, Osaka 530-001 (JP); MORI, Seiya, Osaka-shi, Osaka 530-001 (JP); OKAMOTO, Aya, Osaka-shi, Osaka 530-001 (JP); FUKUNAGA, Tsuyoshi, Osaka-shi, Osaka 530-001 (JP)
(74) Representative: Conti, Marco
(86) International application number: PCT/JP2022/048323
(87) International publication number: WO 2023/166839

(57) **Abstract**

When abrasion powder generated at a sliding portion of a compression mechanism adheres to a glass member of a terminal, a short circuit occurs between terminal pins or the like, the glass member is melted, and the terminal pins may fall off. A terminal (200) includes a body (210), a terminal pin (220), and a glass member (240). A lead wire extending from a motor is connected to the terminal pin (220). The glass member (240) insulates and fixes the terminal pin (220) to the body (210). A bridge member (250a) connecting a part of the terminal pin (220) and a part of the body (210) is provided between a part of the terminal pin (220) and a part of the body (210) of the terminal (200). When a predetermined amount or more of abrasion powder (FF) generated at the sliding portion of the compression mechanism adheres to the bridge member (250a), an electric path (EC) connecting a part of the terminal pin (220) and a part of the body (210) is formed in the bridge member (250a).

## Description

### TECHNICAL FIELD

The present disclosure relates to a compressor and a refrigeration cycle apparatus.

### BACKGROUND ART

As disclosed in Patent Literature 1 (WO 2021/001921 A), there is a technique of insulating and fixing a conductive pin of a terminal of a compressor to a body of the terminal with a glass member.

### SUMMARY OF THE INVENTION

### <Technical Problem>

When abrasion powder generated at a sliding portion of a compression mechanism circulates inside of the compressor by a refrigerant flow, in Patent Literature 1, the abrasion powder adheres to a glass member, and thus, a short circuit occurs between the conductive pins or the like, the glass member is melted, and the conductive pins may fall off.

### <Solution to Problem>

A compressor according to a first aspect includes a compression mechanism, a casing, and a terminal. The compression mechanism is driven by a motor. The casing seals the compression mechanism inside. The terminal passes through a part of the casing. The terminal is used for power supply. The terminal includes a body, a conductive pin, and a glass member. A lead wire extending from the motor is connected to the conductive pin. The glass member insulates and fixes the conductive pin to the body. A bridge member connecting a first portion and a second portion is provided between the first portion and the second portion. The first portion is a part of the conductive pin or the lead wire. The second portion is a part of the casing or the body of the terminal. When a predetermined amount or more of abrasion powder generated at a sliding portion of the compression mechanism adheres to the bridge member, an electric path connecting the first portion and the second portion is formed in the bridge member.

When a predetermined amount or more of abrasion powder generated at the sliding portion of the compression mechanism adheres to the bridge member in the compressor according to the first aspect, the electric path connecting the first portion and the second portion is formed in the bridge member. As a result, a current is grounded through the casing, and the compressor is stopped, and thus, the compressor can prevent the glass member from melting and the conductive pin from falling off.

A compressor according to a second aspect is the compressor according to the first aspect, in which the bridge member is constituted by an insulating member.

A compressor according to a third aspect is the compressor according to the first or second aspect, in which the bridge member is provided with a hole through which the conductive pin passes.

A compressor according to a fourth aspect is the compressor according to any of the first to third aspects, in which a conductor is fixed to a part of the bridge member away from the first portion.

The compressor according to the fourth aspect with such a configuration can facilitate the formation of the electric path connecting the first portion and the second portion in the bridge member.

A compressor according to a fifth aspect is the compressor according to the fourth aspect, in which the conductor has magnetism.

The compressor according to the fifth aspect with such a configuration can facilitate the formation of the electric path connecting the first portion and the second portion in the bridge member.

A compressor according to a sixth aspect is the compressor according to any of the first to third aspects, in which the bridge member has a holding structure that collects the abrasion powder.

The compressor according to the sixth aspect with such a configuration can facilitate the formation of the electric path connecting the first portion and the second portion in the bridge member.

A compressor according to a seventh aspect is the compressor according to the sixth aspect, in which a magnet that collects the abrasion powder is fixed to the bridge member.

The compressor according to the seventh aspect with such a configuration can facilitate the formation of the electric path connecting the first portion and the second portion in the bridge member.

A compressor according to an eighth aspect is the compressor according to any of the first to seventh aspects, in which a contact portion between the first portion and the bridge member is insulated.

A compressor according to a ninth aspect is the compressor according to any of the first to eighth aspects, in which the bridge member is installed at a position where the abrasion powder is more likely to be accumulated than the glass member.

The compressor according to the ninth aspect with such a configuration can ground the current through the casing before a short circuit occurs between the conductive pins or the like.

A compressor according to a tenth aspect is the compressor according to the first to ninth aspects, in which the refrigerant compressed by the compression mechanism is categorized as slightly flammable in class 2L, flammable in class 2, or highly flammable in class 3 by ISO 817.

The compressor capable of preventing the conductive pin from falling off can prevent the refrigerant from leaking from the compressor, the leaking refrigerant from being mixed with the air around the compressor, ignited by the spark generated by a short circuit of the current, and exploding. As a result, the compressor according to the tenth aspect can safely use a slightly flammable refrigerant of class 2L, a flammable refrigerant of class 2, or a highly flammable refrigerant of class 3 by ISO 817.

A refrigeration cycle apparatus according to an eleventh aspect includes a refrigerant circuit that includes the compressor according to any of the first to tenth aspects.

### BRIEF DESCRIPTION OF THE DRAWINGS

FIG. 1 is a schematic configuration diagram of a refrigeration cycle apparatus.
FIG. 2 is a block configuration diagram of the refrigeration cycle apparatus.
FIG. 3 is a sectional side view of a schematic structure of a compressor.
FIG. 4 is a schematic sectional view of a compression mechanism of the compressor taken along line IV-IV in FIG. 3.
FIG. 5 is a diagram of a terminal attached to the compressor as viewed from an inside of the compressor.
FIG. 6 is a sectional side view of a schematic structure of the terminal of the compressor.
FIG. 7 is a schematic perspective view of a bridge member provided in the terminal of the compressor.
FIG. 8 is a diagram showing a state in which abrasion powder generated at a sliding portion of a compression mechanism adheres to a terminal in which a bridge member is not installed and an electric path is formed.
FIG. 9 is a diagram showing a state in which abrasion powder generated at a sliding portion of a compression mechanism adheres to a terminal in which a bridge member is installed and an electric path is formed.
FIG. 10 is a schematic perspective view of a bridge member in Modification 1A.
FIG. 11 is a schematic perspective view of a bridge member in Modification 1B.
FIG. 12 is a sectional side view of a schematic structure of a terminal in Modification 1B.
FIG. 13 is a sectional side view of a schematic structure of the terminal in Modification 1B.
FIG. 14 is a diagram of the terminal in which the bridge member is installed in Modification 1B as viewed from the inside of a compressor.
FIG. 15 is a schematic perspective view of a bridge member in Modification 1C.
FIG. 16 is a sectional side view of a schematic structure of a terminal in Modification 1C.
FIG. 17 is a diagram of the terminal in which the bridge member is installed in Modification 1C as viewed from the inside of a compressor.
FIG. 18 is a schematic perspective view of a bridge member in Modification 1D.
FIG. 19 is a sectional side view of a schematic structure of a terminal in Modification 1D.
FIG. 20 is a sectional side view of a schematic structure of the terminal in Modification 1D.
FIG. 21 is a schematic perspective view of a bridge member in Modification 1E.
FIG. 22 is a schematic perspective view of the bridge member in Modification 1E.
FIG. 23 is a schematic perspective view of the bridge member in Modification 1E.
FIG. 24 is a schematic perspective view of the bridge member in Modification 1E.

### DESCRIPTION OF EMBODIMENTS

A compressor 100 and a refrigeration cycle apparatus 1 including a refrigerant circuit 10 including the compressor 100 according to an embodiment will be described.

### (1) Refrigeration cycle apparatus

### (1-1) Overall configuration

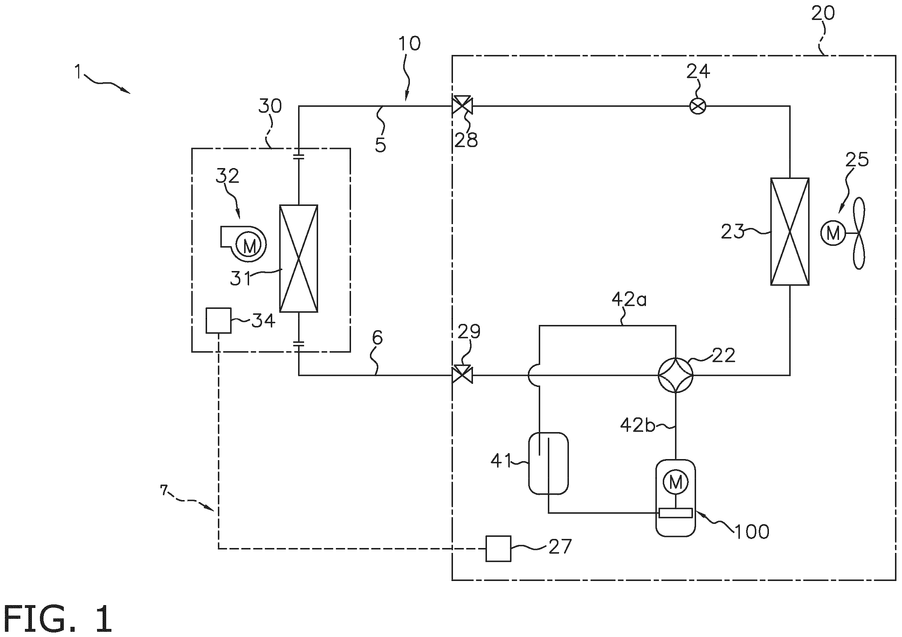

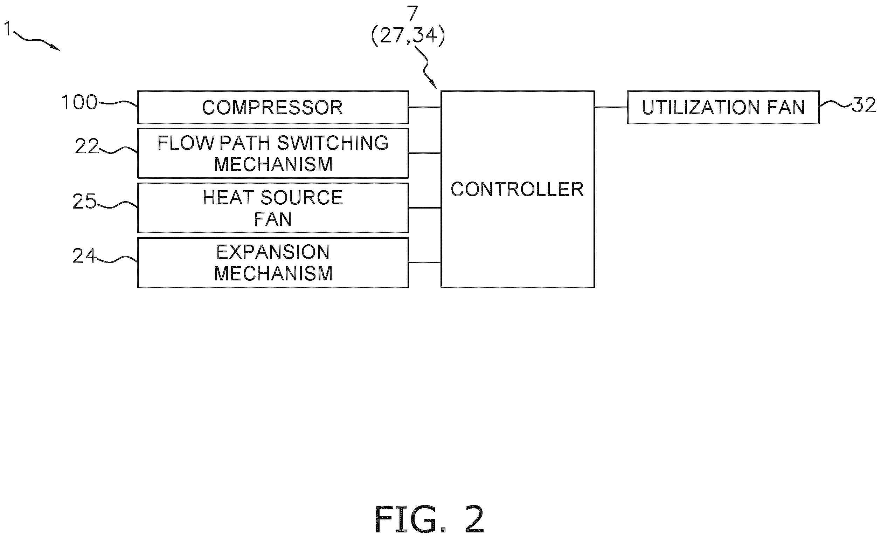

FIG. 1 is a schematic configuration diagram of the refrigeration cycle apparatus 1. FIG. 2 is a block configuration diagram of the refrigeration cycle apparatus 1. The refrigeration cycle apparatus 1 performs a vapor compression refrigeration cycle to compress, radiate or condense, decompress, heat, and evaporate, and then compress again a refrigerant in the refrigerant circuit 10. The refrigerant according to the present embodiment is categorized as slightly flammable, flammable in class 2L, or highly flammable in class 3 by ISO 817. For example, the refrigerant according to the present embodiment may be R32 (single refrigerant), R454C (mixed refrigerant), or the like which is a slightly flammable refrigerant in class 2L, R152a or the like which is a flammable refrigerant in class 2, or R290 (propane) which is a highly flammable refrigerant in class 3, or the like. The refrigerant is not limited in type to the above refrigerants.

As shown in FIG. 1, the refrigeration cycle apparatus 1 mainly includes a heat source unit 20, a utilization unit 30, and a controller 7 that controls operation of the refrigeration cycle apparatus 1.

### (1-2) Detailed configuration

### (1-2-1) Heat source unit

The heat source unit 20 is installed, for example, outdoors or in a machine chamber.

The heat source unit 20 mainly includes a compressor 100, a flow path switching mechanism 22, a heat source heat exchanger 23, an expansion mechanism 24, a heat source fan 25, and an accumulator 41 (see FIG. 1). The heat source unit 20 further includes a first control unit 27 that controls operation of each part constituting the heat source unit 20.

The compressor 100 is a device that compresses a low-pressure refrigerant in the refrigeration cycle sucked from a suction port, increases the pressure of the refrigerant to a high pressure in the refrigeration cycle, and discharges the refrigerant from a discharge port. The compressor 100 is, for example, a sealed compressor in which a positive displacement compression mechanism such as a rotary type or a scroll type is driven by a motor. In the present embodiment, the compressor 100 is a rotary compressor. An inverter can control an operating frequency of the motor of the compressor 100. Details of the compressor 100 will be described later.

The flow path switching mechanism 22 is a mechanism that switches a flow path of the refrigerant circuit 10. The flow path switching mechanism 22 according to the present embodiment is a four-way switching valve. When the refrigeration cycle apparatus 1 performs a cooling operation, the flow path switching mechanism 22 switches a state of the refrigerant circuit 10 to a first state (see the solid line in FIG. 1). When the refrigeration cycle apparatus 1 performs a heating operation, the flow path switching mechanism 22 switches a state of the refrigerant circuit 10 to a second state (see the broken line in FIG. 1).

The heat source heat exchanger 23 functions as a radiator or a condenser for a high-pressure refrigerant in the refrigeration cycle during the cooling operation of the refrigeration cycle apparatus 1, and functions as an evaporator for a low-pressure refrigerant in the refrigeration cycle during the heating operation.

The expansion mechanism 24 is a mechanism for adjusting a pressure and a flow rate of the refrigerant flowing through the refrigerant circuit 10. The expansion mechanism 24 according to the present embodiment is an electronic expansion valve having an adjustable valve opening degree.

The heat source fan 25 generates an air flow such that air as a heat source outside a casing (not shown) of the heat source unit 20 is sucked into the casing and supplied to the heat source heat exchanger 23, and the air having exchanged heat with the refrigerant in the heat source heat exchanger 23 is exhausted to the outside of the casing.

The accumulator 41 is a refrigerant container that has a gas-liquid separating function and can temporarily store a surplus refrigerant in the refrigerant circuit 10 as a liquid refrigerant.

The first control unit 27 includes a microcomputer including, for example, a central processing unit (CPU) and a memory. The first control unit 27 is connected to a second control unit 34 of the utilization unit 30 described later via a communication line, and transmits and receives a control signal and the like to and from the second control unit 34.

### (1-2-2) Utilization unit

The utilization unit 30 is installed, for example, on a wall surface, a ceiling, a floor, or the like in a room that is a target space, or on an attic or the like of the target space.

The utilization unit 30 mainly includes a utilization heat exchanger 31 and a utilization fan 32 (see FIG. 1). The utilization unit 30 further includes the second control unit 34 that controls operation of each part constituting the utilization unit 30.

The utilization heat exchanger 31 functions as an evaporator of a low-pressure refrigerant in the refrigeration cycle during the cooling operation of the refrigeration cycle apparatus 1, and functions as a radiator or a condenser of a high-pressure refrigerant in the refrigeration cycle during the heating operation.

The utilization fan 32 generates an air flow such that air in the air conditioning target space is sucked into a casing (not shown) of the utilization unit 30 and supplied to the utilization heat exchanger 31, and the air having exchanged heat with the refrigerant in the utilization heat exchanger 31 is blown out of the casing.

The second control unit 34 includes a microcomputer including, for example, a central processing unit (CPU) and a memory. The second control unit 34 is connected to the first control unit 27 of the heat source unit 20 via a communication line, and transmits and receives a control signal and the like to and from the first control unit 27.

### (1-2-3) Controller

As shown in FIG. 2, in the refrigeration cycle apparatus 1, the first control unit 27 of the heat source unit 20 and the second control unit 34 of the utilization unit 30 are connected via a communication line to constitute the controller 7 that controls the operation of the refrigeration cycle apparatus 1.

The controller 7 controls operation of various configurations of the heat source unit 20 and the utilization unit 30 on the basis of an instruction from a remote controller (not shown), detection values of various sensors provided in the heat source unit 20 and the utilization unit 30, and the like.

### (2) Compressor

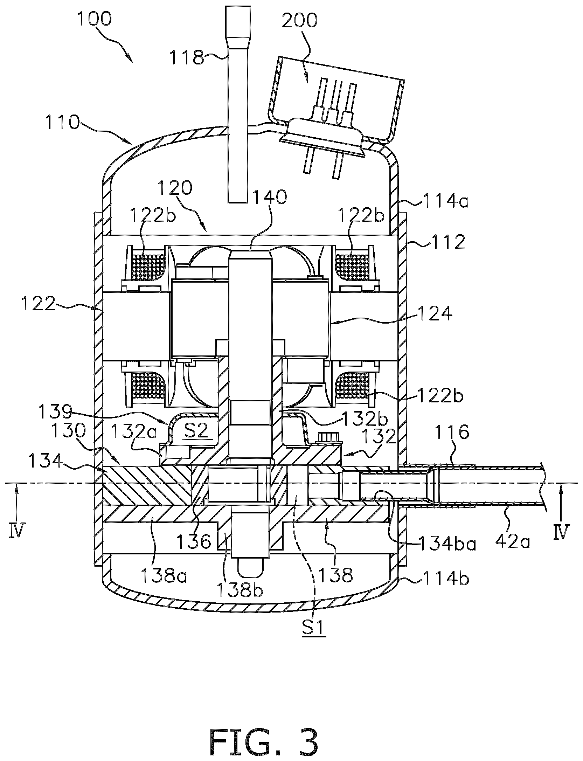

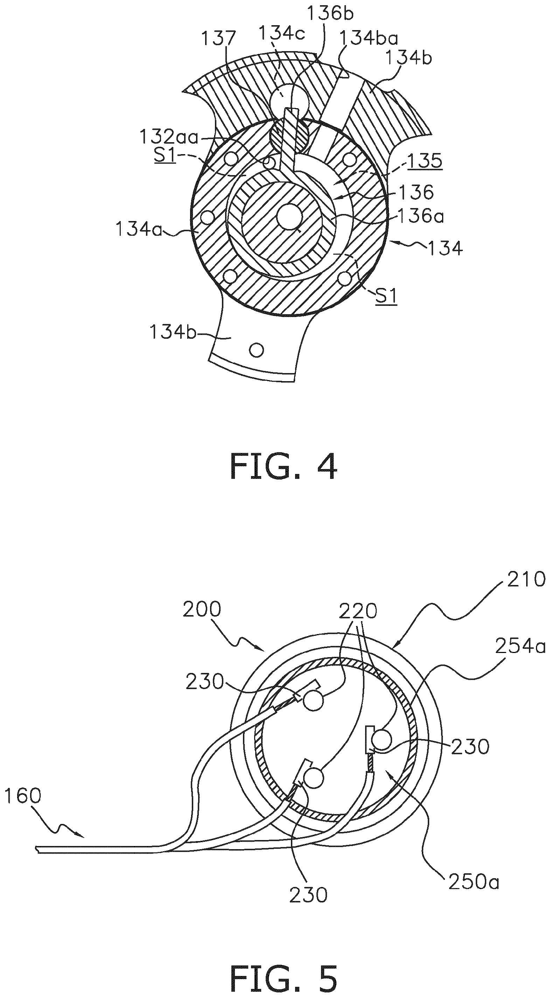

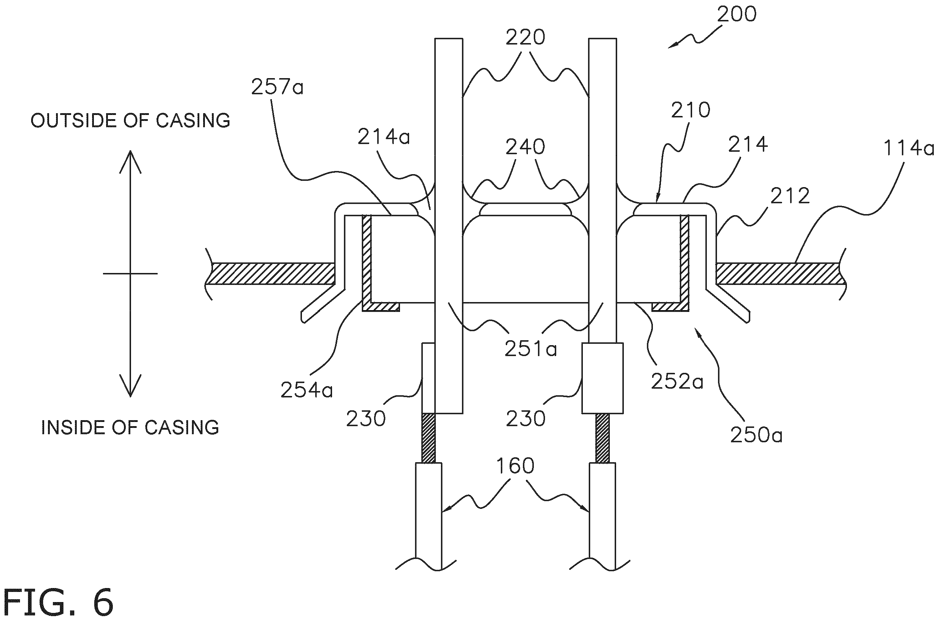

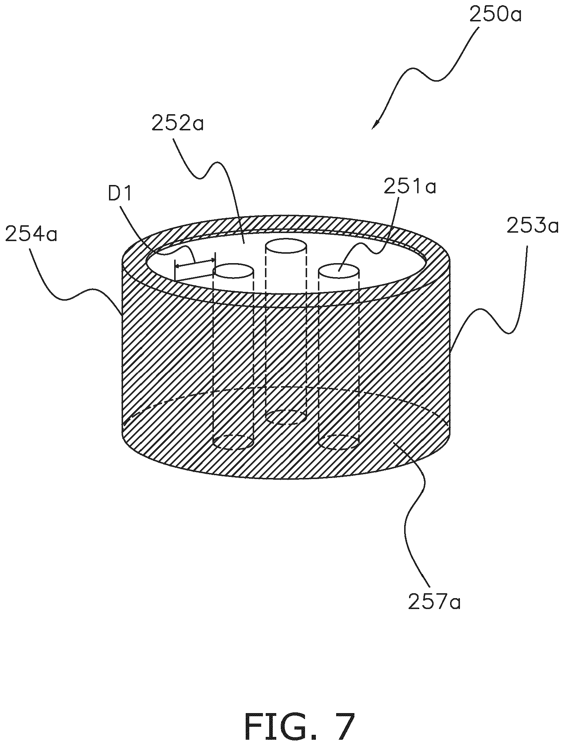

FIG. 3 is a sectional side view of a schematic structure of the compressor 100. FIG. 4 is a schematic sectional view of a compression mechanism 130 of the compressor 100 taken along line IV-IV in FIG. 3. FIG. 5 is a diagram of a terminal 200 attached to the compressor 100 as viewed from an inside of the compressor 100. FIG. 6 is a sectional side view of a schematic structure of the terminal 200 of the compressor 100. FIG. 7 is a schematic perspective view of a bridge member 250a provided in the terminal 200 of the compressor 100.

As shown in FIG. 3, the compressor 100 according to the present embodiment is a one-cylinder rotary compressor. However, the type of the compressor 100 is not limited to this type, and the compressor 100 may be, for example, a two-cylinder rotary compressor, a scroll compressor, or a screw compressor.

The compressor 100 mainly includes a casing 110, a motor 120, the compression mechanism 130, a drive shaft 140, the terminal 200, and the bridge member 250a.

### (2-1) Casing

The casing 110 is a vertical cylindrical container.

The casing 110 includes a cylindrical member 112 having a cylindrical shape with upper and lower openings, and a bowl-shaped upper lid 114a and a bowl-shaped lower lid 114b provided at an upper end and a lower end of the cylindrical member 112, respectively (see FIG. 3). The cylindrical member 112, the upper lid 114a, and the lower lid 114b are fixed by welding to maintain a hermetic state.

The cylindrical member 112 is provided with a suction pipe connection portion 116, and a suction pipe 42a is inserted into the suction pipe connection portion 116. The suction pipe 42a inserted into the suction pipe connection portion 116 is coupled to the compression mechanism 130 (see FIG. 3). The upper lid 114a is provided with a discharge pipe connection portion 118 (see FIG. 3), and a discharge pipe 42b is connected to the discharge pipe connection portion 118. The high-pressure refrigerant compressed by the compression mechanism 130 is discharged to the discharge pipe 42b via the discharge pipe connection portion 118.

The motor 120, the compression mechanism 130, and the drive shaft 140 are sealed inside of the casing 110 (see FIG. 3). The terminal 200 is attached to the upper lid 114a of the casing 110.

### (2-2) Motor

The motor 120 drives the compression mechanism 130. The motor 120 is disposed above the compression mechanism 130.

The motor 120 mainly includes a stator 122 and a rotor 124. The rotor 124 is disposed inside the stator 122 having an annular shape with a slight gap (air gap) from the stator 122 (see FIG. 3).

The stator 122 mainly includes an annular stator core, a winding wire 122b wound around the stator core, and insulators disposed above an upper end face and below a lower end face of the stator core (see FIG. 3). The winding wire 122b is wound around the stator core with the insulator interposed therebetween. The winding wire 122b is connected to the terminal 200 attached to the casing 110 via a lead wire 160 (see FIGS. 5 and 6). Power is supplied to the winding wire 122b from an external power source via the terminal 200 and the lead wire 160. When a current flows through the winding wire 122b wound around the stator core with the lead wire 160 interposed therebetween, a rotating magnetic field is generated on the stator 122.

The rotor 124 has a cylindrical member. The rotor 124 includes a plurality of permanent magnets (not shown). The rotor 124 is formed by stacking a plurality of annular electromagnetic steel plates. The plurality of permanent magnets is disposed so as to surround an axis of the rotor 124 (an axis of the drive shaft 140). The drive shaft 140 is inserted and fixed in a hollow portion of the rotor 124. The drive shaft 140 couples the rotor 124 and the compression mechanism 130.

When a current is supplied to the motor 120 and the current flows through the winding wire 122b, the rotor 124 rotates by the rotating magnetic field generated on the stator 122. When the rotor 124 rotates, the drive shaft 140 connected to the rotor 124 also rotates, and a driving force is applied to the compression mechanism 130 via the drive shaft 140.

### (2-3) Compression mechanism

The compression mechanism 130 is a mechanism that compresses the refrigerant sucked from the suction pipe 42a.

The compression mechanism 130 is accommodated below the motor 120 in a lower part of the casing 110 (see FIG. 3).

As shown in FIGS. 3 and 4, the rotary compression mechanism 130 mainly includes a front head 132, a cylinder 134, a piston 136, a rear head 138, and a muffler 139. The front head 132, the cylinder 134, the piston 136, and the rear head 138 include, for example, cast iron.

### (2-3-1) Cylinder

The cylinder 134 includes a cylindrical portion 134a having a cylindrical shape with upper and lower end surfaces opened, and an extending portion 134b extending outward (toward the casing 110) from the cylindrical portion 134a in plan view (see FIG. 4). An end of the extending portion 134b is fixed to the cylindrical member 112 of the casing 110, and thus, the cylinder 134 is fixed to the cylindrical member 112.

The piston 136 that compresses a refrigerant is accommodated in a columnar space surrounded by an inner peripheral surface of the cylindrical portion 134a (see FIG. 4).

The extending portion 134b is provided with a suction hole 134ba through which the low-pressure refrigerant in the refrigeration cycle is sucked (see FIG. 4). A tip of the suction pipe 42a is inserted into the suction hole 134ba from an opening of the suction hole 134ba formed on an outer peripheral surface of the extending portion 134b (see FIG. 3).

The front head 132 is disposed above the cylinder 134 so as to close the upper opening of the cylindrical portion 134a (see FIG. 3). The rear head 138 is disposed below the cylinder 134 so as to close the lower opening of the cylindrical portion 134a (see FIG. 3). The inner peripheral surface of the cylindrical portion 134a of the cylinder 134, a lower surface of the front head 132, and an upper surface of the rear head 138 form a cylinder chamber 135. The piston 136 is disposed in the cylinder chamber 135 (see FIG. 3). The inner peripheral surface of the cylindrical portion 134a of the cylinder 134, the lower surface of the front head 132, the upper surface of the rear head 138, and an outer peripheral surface of the piston 136 disposed in the cylinder chamber 135 form a compression chamber S1 in which the refrigerant is compressed (see FIGS. 3 and 4).

The cylinder 134 is provided with a blade swing space 134c in which a bush 137 and a blade 136b of the piston 136 described later are disposed.

### (2-3-2) Front head

As shown in FIG. 3, the front head 132 includes a front head disk portion 132a that closes the upper opening of the cylindrical portion 134a of the cylinder 134, and an upper bearing 132b that extends upward from a center of the front head disk portion 132a. The upper bearing 132b has a cylindrical shape and functions as a bearing of the drive shaft 140.

The front head disk portion 132a is provided with a discharge hole 132aa through which the refrigerant compressed in the compression chamber S1 is discharged (see FIG. 4).

### (2-3-3) Rear head

As shown in FIG. 3, the rear head 138 includes a rear head disk portion 138a that closes the lower opening of the cylindrical portion 134a of the cylinder 134, and a lower bearing 138b that extends downward from a center of the rear head disk portion 138a. The lower bearing 138b has a cylindrical shape and functions as a bearing of the drive shaft 140.

### (2-3-4) Piston

The piston 136 is disposed in the cylinder chamber 135. The piston 136 is attached to the drive shaft 140.

The piston 136 is a member in which a cylindrical roller 136a and a plate-shaped blade 136b extending in a radial direction of the roller 136a from an outer surface of the roller 136a are integrated.

The roller 136a is disposed in the cylinder chamber 135. The drive shaft 140 is fitted in a hollow portion of the roller 136a.

The blade 136b of the piston 136 is disposed in the blade swing space 134c formed in the cylinder 134, and is swingably supported by the cylinder 134 with a bush 137 disposed in the blade swing space 134c interposed therebetween. The blade 136b is slidable with respect to the bush 137 in a longitudinal direction of the blade 136b. During operation of the compressor 100, the blade 136b swings with respect to the cylinder 134, and repeats movement of entering the blade swing space 134c and exiting the blade swing space 134c.

As shown in FIG. 4, the roller 136a and the blade 136b of the piston 136 form the compression chamber S1 whose volume changes due to a revolution of the piston 136 so as to partition the cylinder chamber 135. When the drive shaft 140 rotates, the roller 136a revolves with respect to the cylinder 134. Accordingly, the volume of the compression chamber S1 changes, and the low-pressure refrigerant sucked through the suction pipe 42a is compressed into the high-pressure refrigerant, and is discharged from the discharge hole 132aa into a muffler space S2.

### (2-3-5) Muffler

As shown in FIG. 3, the muffler 139 is attached to an upper surface of a peripheral edge of the front head disk portion 132a of the front head 132.

The muffler 139 forms the muffler space S2 together with the upper surface of the front head disk portion 132a and an outer peripheral surface of the upper bearing 132b. The muffler space S2 is a space for reducing noise caused by discharge of the refrigerant from the compression chamber S1.

### (2-4) Terminal

The terminal 200 is attached to the upper lid 114a by passing through the upper lid 114a of the casing 110. The terminal 200 is used to supply power to the motor 120.

The terminal 200 mainly includes a body 210, three terminal pins 220 (conductive pins), and a glass member 240 (see FIGS. 5 and 6).

### (2-4-1) Body

The body 210 is a member that supports the terminal pins 220. The material of the body 210 is, for example, iron or stainless steel. The body 210 is a substantially hat-shaped member. The body 210 includes a side wall 212 having a substantially cylindrical shape and a disk 214 that blocks one end of the side wall 212. The other end (a side where the disk 214 does not exist) of the side wall 212 is opened. The terminal 200 is attached to the casing 110 such that a side of the body 210 on which the disk 214 exists is disposed outside the casing 110 and a side of the body 210 on which the opening is disposed is disposed inside of the casing 110. The side wall 212 of the body 210 to which the terminal pins 220 are fixed is fixed to the upper lid 114a of the casing 110 by welding.

### (2-4-2) Terminal pin

The terminal pin 220 is a columnar member. The material of the terminal pin 220 is, for example, an iron-chromium alloy or copper. The terminal pin 220 extends through a hole 214a formed in the disk 214 of the body 210 (see FIG. 6). The three terminal pins 220 extend substantially parallel to each other.

A terminal plate 230 is fixed to an end of each terminal pin 220 inside of the casing 110 (see FIGS. 5 and 6). The lead wire 160 for connecting the winding wire 122b of the stator 122 of the motor 120 and the terminal 200 is connected to each terminal plate 230 (see FIGS. 5 and 6). In other words, the lead wire 160 extending from the motor 120 is connected to each terminal pin 220. Although not shown here, a terminal plate for connecting an electric wire of an external power source may also be provided at an end of each terminal pin 220 outside of the casing 110.

### (2-4-3) Glass member

The glass member 240 is a seal member (fixing adhesive) for insulating and fixing the terminal pin 220 to the body 210. The glass member 240 is, for example, soda barium glass or borosilicate glass.

### (2-5) Bridge member

The bridge member 250a is a columnar member (see FIG. 7). The bridge member 250a is constituted by an insulating member of glass or the like. The bridge member 250a is provided with a columnar hole 251a through which each terminal pin 220 passes. A conductor 254a is fixed to a part of an upper surface 252a and a side surface 253a of the bridge member 250a away from each hole 251a. In the present embodiment, the conductor 254a includes a magnetic material such as iron. However, the material of the conductor 254a is not limited to this material, and the conductor 254a may include a material having no magnetism, such as copper. On the upper surface 252a, a distance D1 between each hole 251a and the conductor 254a is preferably equal to or greater than 3.2 mm.

As shown in FIG. 6, the bridge member 250a is installed by inserting the terminal pins 220 into the holes 251a from the inside to the outside of the casing 110 such that the upper surface 252a faces the inside of the casing 110 and covers the glass member 240. The lower surface 257a of the bridge member 250a is adhered to the inside of the casing 110 of the disk 214 such that the conductor 254a contacts the inside of the casing 110 of the disk 214. In other words, the bridge member 250a connecting a part of the terminal pin 220 and a part of the body 210 is provided between a part of the terminal pin 220 and a part of the body 210. The bridge member 250a is installed at a position where abrasion powder FF generated at a sliding portion of the compression mechanism 130 is more likely to accumulate than the glass member 240. The conductor 254a is fixed to a part of the upper surface 252a and the side surface 253a of the bridge member 250a away from a part of each terminal pin 220. A contact portion between a part of each terminal pin 220 and the bridge member 250a is insulated.

### (3) Operation of compressor

In the compressor 100, when the motor 120 is operated and the drive shaft 140 rotates, the roller 136a of the piston 136 of the compression mechanism 130 revolves due to the rotation of the drive shaft 140. When the roller 136a revolves, the volume of the compression chamber S1 communicating with the suction pipe 42a gradually increases, and the low-pressure refrigerant is sucked from the suction pipe 42a into the compression chamber S1. When the roller 136a of the piston 136 further revolves, a communicating state between the compression chamber S1 and the suction pipe 42a is released, and the refrigerant starts to be compressed in the compression chamber S1 communicating with the discharge hole 132aa. Thereafter, the volume of the compression chamber S1 communicating with the discharge hole 132aa gradually decreases, and the pressure of the refrigerant increases. The refrigerant having higher pressure as the volume of compression chamber S 1 decreases pushes open a discharge valve provided in the discharge hole 132aa, and is discharged from the discharge hole 132aa into the muffler space S2. The refrigerant flowing into the muffler space S2 flows into a space above the compression mechanism 130 from a muffler discharge hole (not shown) of the muffler 139. The refrigerant flowing into the space above the compression mechanism 130 passes through the gap or the like between the stator 122 and the rotor 124 of the motor 120, cools the motor 120, and then is discharged to the discharge pipe 42b via the discharge pipe connection portion 118.

### (4) Operation when abrasion powder generated at sliding portion of compression mechanism adheres to terminal

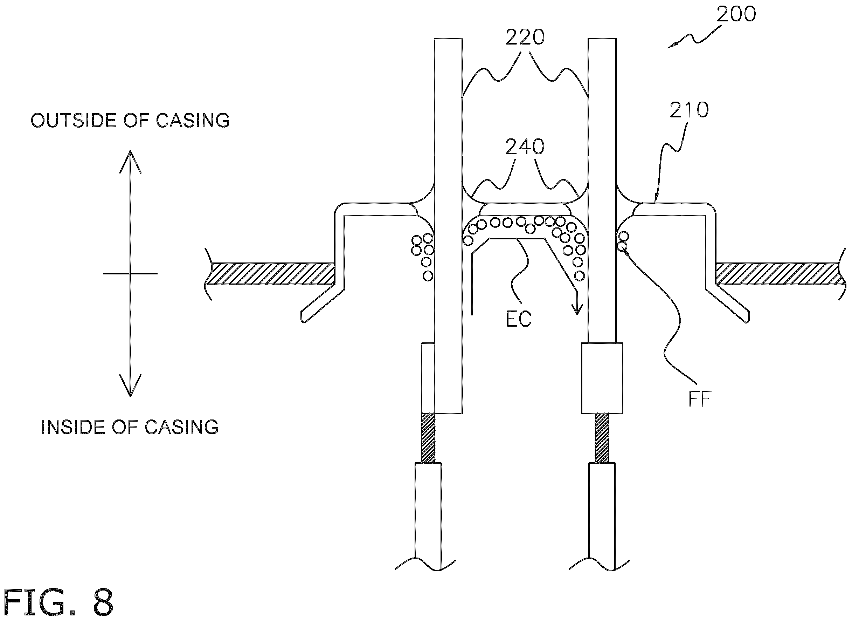

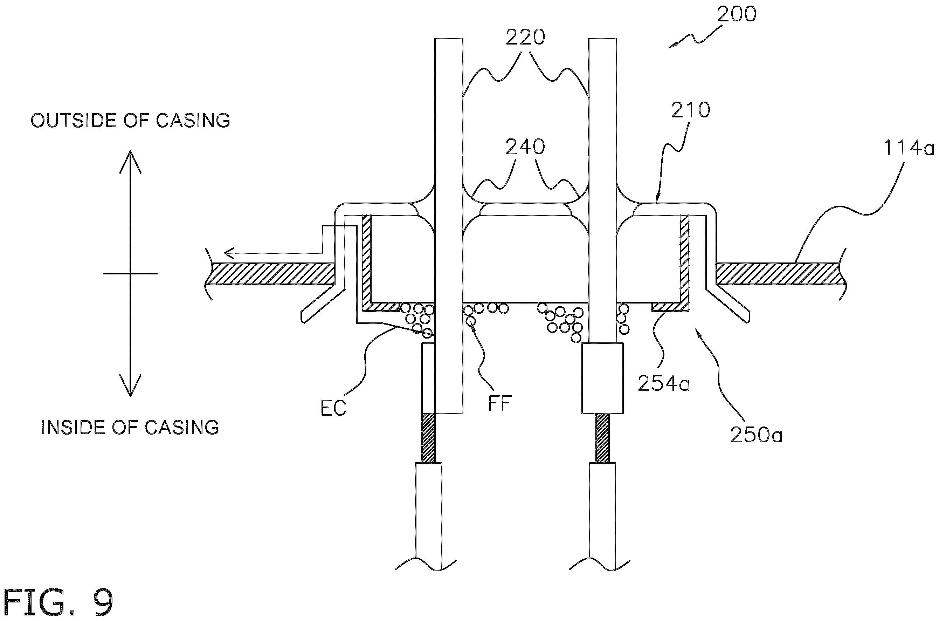

FIG. 8 is a diagram showing a state in which the abrasion powder FF generated at the sliding portion of the compression mechanism 130 adheres to the terminal 200 (corresponding to a conventional terminal) where the bridge member 250a is not installed, and an electric path EC is formed. FIG. 9 is a diagram showing a state in which the abrasion powder FF generated at the sliding portion of the compression mechanism 130 adheres to the terminal 200 in which the bridge member 250a is installed and the electric path EC is formed.

The compression mechanism 130 includes, as sliding portions, for example, sliding portions of the piston 136, the cylinder 134, the front head 132, and the rear head 138, sliding portions of the drive shaft 140, and the upper bearing 132b of the front head 132 and the lower bearing 138b of the rear head 138, and the like. In the present embodiment, the rotary compressor is assumed, but the scroll compressor includes, as the sliding portions, for example, a sliding portion between a crankshaft and the bearing of the crankshaft, a sliding portion (peripheral edge) between a movable scroll and a fixed scroll, and a sliding portion between a key of an Oldham's coupling and a keyway.

The abrasion powder FF generated at the sliding portion of the compression mechanism 130 adheres to the terminal 200. As shown in FIG. 8, in the terminal 200 in which the bridge member 250a is not installed, a relatively large amount of the abrasion powder FF adheres to the glass member 240. When the abrasion powder FF adheres to the glass member 340, a current flows between the adjacent terminal pins 220 or the like via the abrasion powder FF (short-circuit occurs between the terminal pins 220 or the like), and Joule heat is generated. When Joule heat is generated, the glass member 240 is melted, and the terminal pins 220 may fall off from the body 210. Furthermore, when the terminal pin 220 falls off from the body 210, the refrigerant leaks from the compressor 100, and the leaking refrigerant (in particular, a slightly flammable, flammable, or highly flammable refrigerant) is mixed with air around the compressor 100, and may be ignited and exploded by spark generated by short circuit of current.

Therefore, it is preferable to stop the compressor 100 before the abrasion powder FF in an amount that causes a short circuit between the terminal pins 220 or the like adheres to the glass member 340.

As shown in FIG. 9, in the terminal 200 according to the present embodiment, the bridge member 250a is installed at a position where the abrasion powder FF is more likely to accumulate than the glass member 240. Therefore, when a predetermined amount or more of the abrasion powder FF generated at the sliding portion of the compression mechanism 130 adheres to the bridge member 250a, the electric path EC connecting a part of the terminal pin 220 and a part of the body 210 is formed in the bridge member 250a before a short circuit occurs between the terminal pins 220 or the like. As a result, the current is grounded through the terminal pin 220, the abrasion powder FF, the conductor 254a, the body 210, and the casing 110, and a breaker of the refrigeration cycle apparatus 1 including the compressor 100 trips, and thus, the compressor 100 can be stopped.

### (5) Characteristics

### (5-1)

Conventionally, there is a technique of insulating and fixing a conductive pin of a terminal of a compressor to a body of the terminal with a glass member.

When abrasion powder generated at a sliding portion of a compression mechanism circulates inside of the compressor by a refrigerant flow, conventionally, the abrasion powder adheres to a glass member, and thus, a short circuit occurs between terminal pins or the like, the glass member is melted, and the terminal pins may fall off.

The compressor 100 according to the present embodiment includes the compression mechanism 130, the casing 110, and the terminal 200. The compression mechanism 130 is driven by the motor 120. The casing 110 seals the compression mechanism 130 inside. The terminal 200 passes through a part of the casing 110. The terminal 200 is used for power supply. The terminal 200 includes the body 210, the terminal pin 220, and the glass member 240. The lead wire 160 extending from the motor 120 is connected to the terminal pin 220. The glass member 240 insulates and fixes the terminal pin 220 to the body 210. The bridge member 250a connecting a part of the terminal pin 220 and a part of the body 210 is provided between a part of the terminal pin 220 and a part of the body 210 of the terminal 200. When a predetermined amount or more of the abrasion powder FF generated at the sliding portion of the compression mechanism 130 adheres to the bridge member 250a, the electric path EC connecting a part of the terminal pin 220 and a part of the body 210 is formed in the bridge member 250a.

In the compressor 100, when a predetermined amount or more of the abrasion powder FF generated at the sliding portion of the compression mechanism 130 adheres to the bridge member 250a, the electric path EC connecting a part of the terminal pin 220 and a part of the body 210 is formed in the bridge member 250a. As a result, a current is grounded through the casing 110, and the compressor 100 is stopped, and thus, the compressor 100 can prevent the glass member 240 from melting and the terminal pin 220 from falling off.

### (5-2)

In the compressor 100 according to the present embodiment, the bridge member 250a is constituted by an insulating member.

### (5-3)

In the compressor 100 according to the present embodiment, the bridge member 250a is provided with the hole 251a through which each terminal pin 220 passes.

### (5-4)

In the compressor 100 according to the present embodiment, the conductor 254a is fixed to a part of the upper surface 252a and the side surface 253a of the bridge member 250a away from a part of each terminal pin 220.

As a result, the compressor 100 can facilitate the formation of the electric path EC connecting a part of the terminal pin 220 and a part of the body 210 in the bridge member 250a.

### (5-5)

In the compressor 100 according to the present embodiment, the conductor 254a has magnetism.

As a result, the compressor 100 can further facilitate the formation of the electric path EC connecting a part of the terminal pin 220 and a part of the body 210 in the bridge member 250a.

### (5-6)

In the compressor 100 according to the present embodiment, a contact portion between a part of each terminal pin 220 and the bridge member 250a is insulated.

### (5-7)

In the compressor 100 according to the present embodiment, the bridge member 250a is installed at a position where the abrasion powder FF is more likely to accumulate than the glass member 240.

As a result, the compressor 100 can ground a current through the casing 110 before a short circuit occurs between the terminal pins 220 or the like.

### (5-8)

In the compressor 100 according to the present embodiment, the refrigerant compressed by the compression mechanism 130 is categorized as slightly flammable in class 2L, flammable in class 2, or highly flammable in class 3 by ISO 817.

The compressor 100 capable of preventing the terminal pin 220 from falling off can prevent the refrigerant from leaking from the compressor 100, the leaking refrigerant from being mixed with the air around the compressor 100, ignited by the spark generated by a short circuit of the current, and exploding. As a result, the compressor 100 can safely use a slightly flammable refrigerant of class 2L, a flammable refrigerant of class 2, or a highly flammable refrigerant of class 3 by ISO 817.

### (5-9)

The refrigeration cycle apparatus 1 according to the present embodiment includes the refrigerant circuit 10 including the compressor 100.

### (6) Modifications

### (6-1) Modification 1A

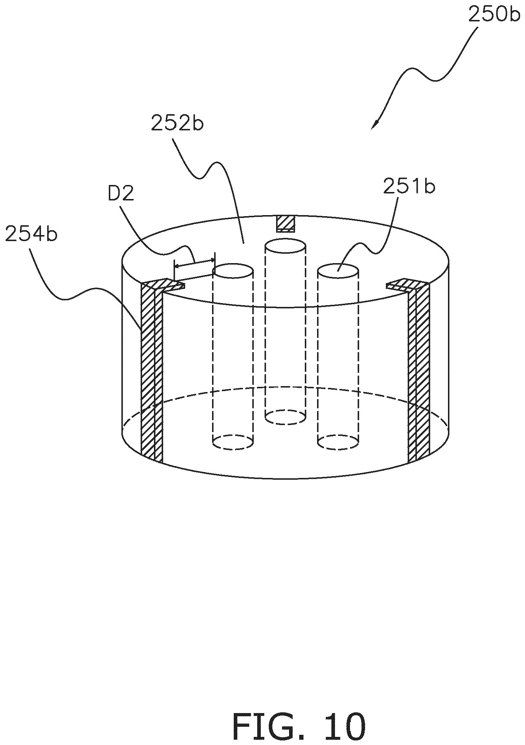

FIG. 10 is a schematic perspective view of a bridge member 250b according to the present modification. As the bridge member, the bridge member 250b may be used instead of the bridge member 250a. As shown in FIG. 10, unlike the bridge member 250a, in the bridge member 250b, a conductor 254b is fixed only in a direction in which each hole 251b exists when viewed from a center of an upper surface 252b. On the upper surface 252b, a distance D2 between each hole 251b and the conductor 254b is preferably equal to or greater than 3.2 mm.

### (6-2) Modification 1B

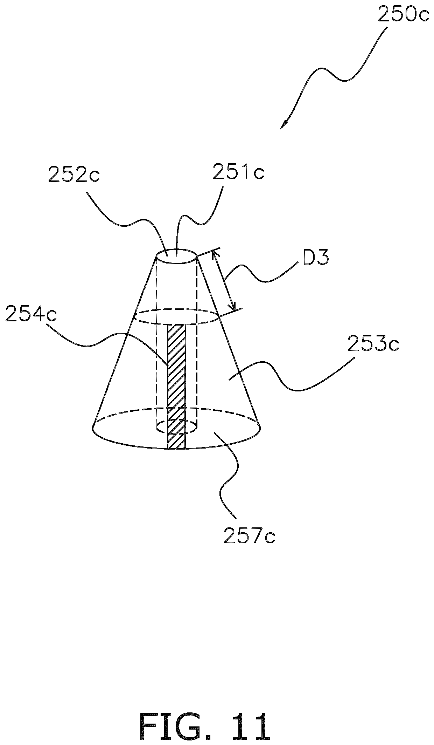

FIG. 11 is a schematic perspective view of a bridge member 250c according to the present modification. As the bridge member, the bridge member 250c may be used instead of the bridge member 250a. As shown in FIG. 11, the bridge member 250c is a conical member. The bridge member 250c is provided with a columnar hole 251c through which each terminal pin 220 passes. A rectangular parallelepiped conductor 254c is fixed to a part of a side surface 253c of the bridge member 250c away from the hole 251c. On the side surface 253c of the bridge member 250c, a distance D3 between the upper end 252c and the conductor 254c is preferably greater than or equal to 3.2 mm.

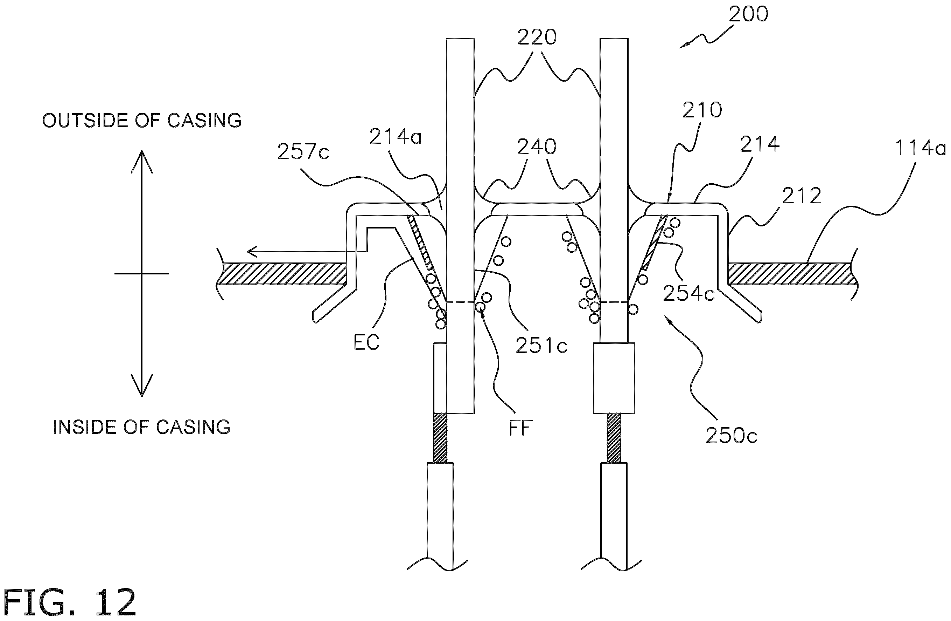

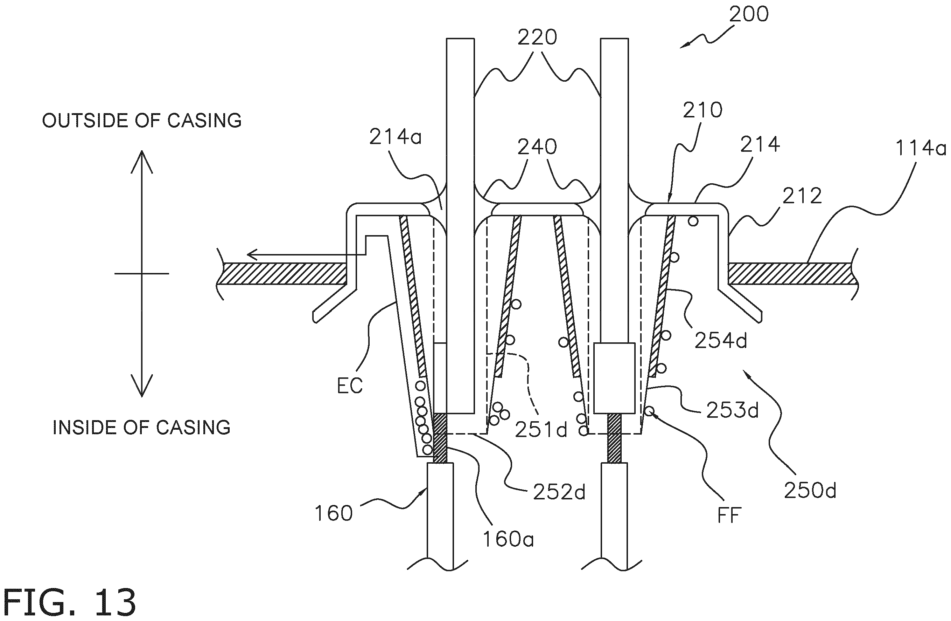

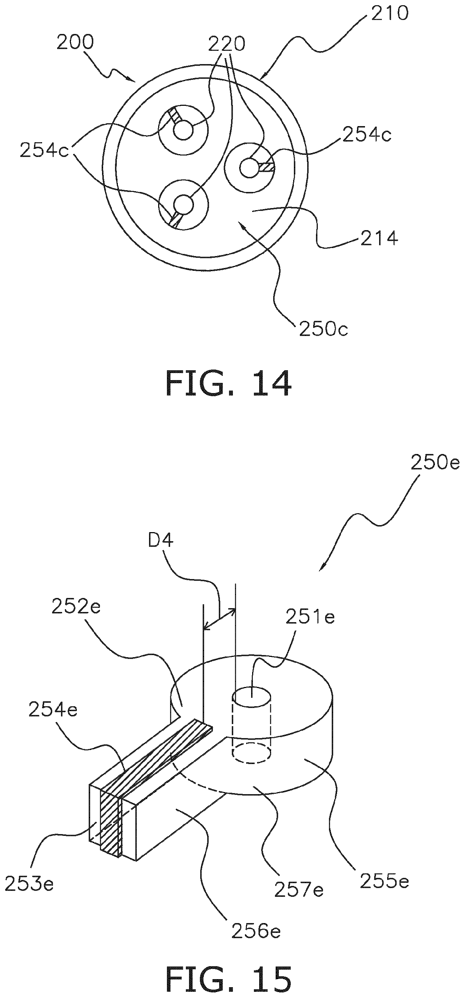

FIGS. 12 and 13 are sectional side views of a schematic structure of the terminal 200 according to the present modification. FIG. 14 is a diagram of the terminal 200 provided with the bridge member 250c according to the present modification as viewed from the inside of the compressor 100. As shown in FIG. 12, the bridge member 250c is installed by inserting the terminal pins 220 into the holes 251c from the inside to the outside of the casing 110 such that a lower surface 257c faces the outside of the casing 110 and covers the glass member 240. The lower surface 257c of the bridge member 250c is adhered to the inside of the casing 110 of the disk 214 such that the conductor 254c contacts the inside of the casing 110 of the disk 214. As shown in FIG. 14, the bridge member 250c is fixed such that the position of the conductor 254c is behind each terminal pin 220 when viewed from a center of the disk 214. However, the present disclosure is not limited to this configuration, and the bridge member 250c may be fixed such that the position of the conductor 254c is downstream of the refrigerant flow as viewed from each terminal pin 220.

The bridge member 250c is installed at a position where the abrasion powder FF is more likely to accumulate than the glass member 240. Therefore, when a predetermined amount or more of the abrasion powder FF generated at the sliding portion of the compression mechanism 130 adheres to the bridge member 250c, the electric path EC connecting a part of the terminal pin 220 and a part of the body 210 is formed in the bridge member 250c before a short circuit occurs between the terminal pins 220 or the like. As a result, the current is grounded through the terminal pin 220, the abrasion powder FF, the conductor 254c, the body 210, and the casing 110, and the breaker of the refrigeration cycle apparatus 1 including the compressor 100 trips, and thus, the compressor 100 can be stopped.

As shown in FIG. 13, a bridge member 250d having a changed size from the size of the bridge member 250c may be used as the bridge member. The bridge member 250d is installed such that a side surface near an upper end 252d of the hole 251c is in contact with a core wire 160a of the lead wire 160. In other words, the bridge member 250d that connects a part of the lead wire 160 and a part of the body 210 is provided between a part of the lead wire 160 (the core wire 160a) and a part of the body 210. A conductor 254d is fixed to a part of a side surface 253d of the bridge member 250d away from a part of the lead wire 160. A contact portion between a part of the lead wire 160 and the bridge member 250d is insulated.

In this case, when a predetermined amount or more of the abrasion powder FF generated at the sliding portion of the compression mechanism 130 adheres to the bridge member 250d, the electric path EC connecting a part of the lead wire 160 and a part of the body 210 is formed in the bridge member 250d before a short circuit occurs between the terminal pins 220 or the like. As a result, the current is grounded through the lead wire 160, the abrasion powder FF, the conductor 254d, the body 210, and the casing 110, and the breaker of the refrigeration cycle apparatus 1 including the compressor 100 trips, and thus, the compressor 100 can be stopped.

### (6-3) Modification 1C

FIG. 15 is a schematic perspective view of a bridge member 250e according to the present modification. As the bridge member, the bridge member 250e may be used instead of the bridge member 250a. As shown in FIG. 15, the bridge member 250e is a member in which a columnar member 255e and a rectangular parallelepiped member 256e are connected. The bridge member 250e is provided with a columnar hole 251e through which each terminal pin 220 passes. The conductor 254e bent at a right angle is fixed to an upper surface 252e and a side surface 253e of the rectangular parallelepiped member 256e of the bridge member 250e away from the hole 251e. On the upper surface 252e of the bridge member 250e, a distance D4 between the hole 251e and the conductor 254e is preferably greater than or equal to 3.2 mm.

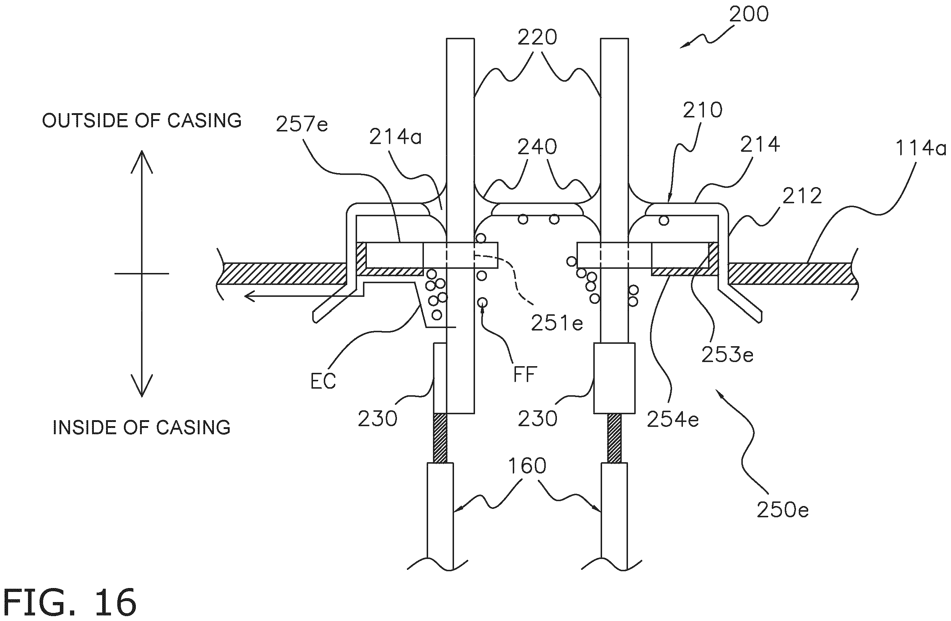

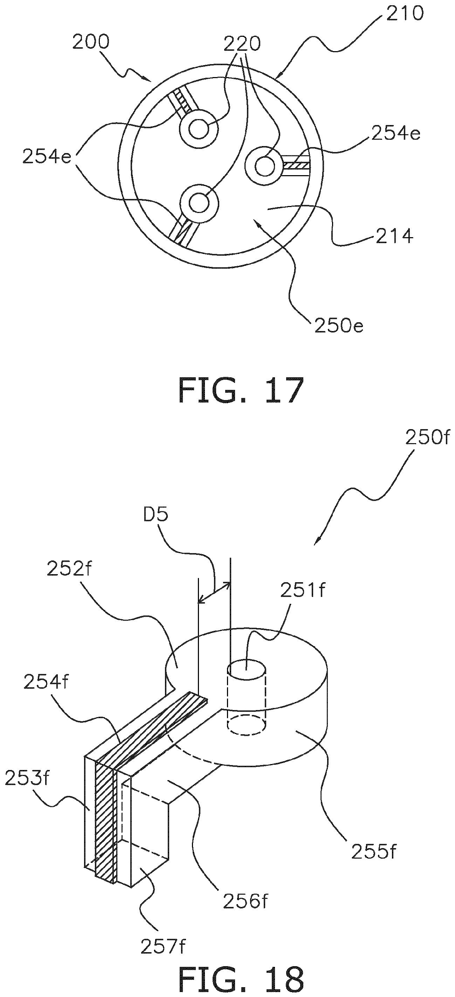

FIG. 16 is sectional side view of a schematic structure of the terminal 200 according to the present modification. FIG. 17 is a diagram of the terminal 200 provided with the bridge member 250e according to the present modification as viewed from the inside of the compressor 100. As shown in FIG. 16, the bridge member 250e is installed by inserting the terminal pins 220 into the holes 251e from the inside to the outside of the casing 110 such that a lower surface 257e faces the outside of the casing 110. The bridge member 250e is fixed to each terminal pin 220. As shown in FIG. 17, the bridge member 250e is fixed such that the position of the conductor 254e is behind each terminal pin 220 when viewed from a center of the disk 214. However, the present disclosure is not limited to this configuration, and the bridge member 250e may be fixed such that the position of the conductor 254e is downstream of the refrigerant flow as viewed from each terminal pin 220. The bridge member 250e is fixed such that the conductor 254e near the side surface 253e is in contact with the side wall 212 of the body 210.

The bridge member 250e is installed at a position where the abrasion powder FF is more likely to accumulate than the glass member 240. Therefore, when a predetermined amount or more of the abrasion powder FF generated at the sliding portion of the compression mechanism 130 adheres to the bridge member 250e, the electric path EC connecting a part of the terminal pin 220 and a part of the body 210 is formed in the bridge member 250e before a short circuit occurs between the terminal pins 220 or the like. As a result, the current is grounded through the terminal pin 220, the abrasion powder FF, the conductor 254e, the body 210, and the casing 110, and the breaker of the refrigeration cycle apparatus 1 including the compressor 100 trips, and thus, the compressor 100 can be stopped.

### (6-4) Modification 1D

FIG. 18 is a schematic perspective view of a bridge member 250f according to the present modification. As the bridge member, the bridge member 250f may be used instead of the bridge member 250a. As shown in FIG. 18, the bridge member 250f is a member in which a columnar member 255f and a member 256f bent at a right angle are connected. The bridge member 250f is provided with a columnar hole 251f through which each terminal pin 220 passes. The conductor 254f bent at a right angle is fixed to an upper surface 252f and a side surface 253f of the member 256f bent at the right angle of the bridge member 250f away from the hole 251f. On the upper surface 252f of the bridge member 250f, a distance D5 between the hole 251f and the conductor 254f is preferably greater than or equal to 3.2 mm.

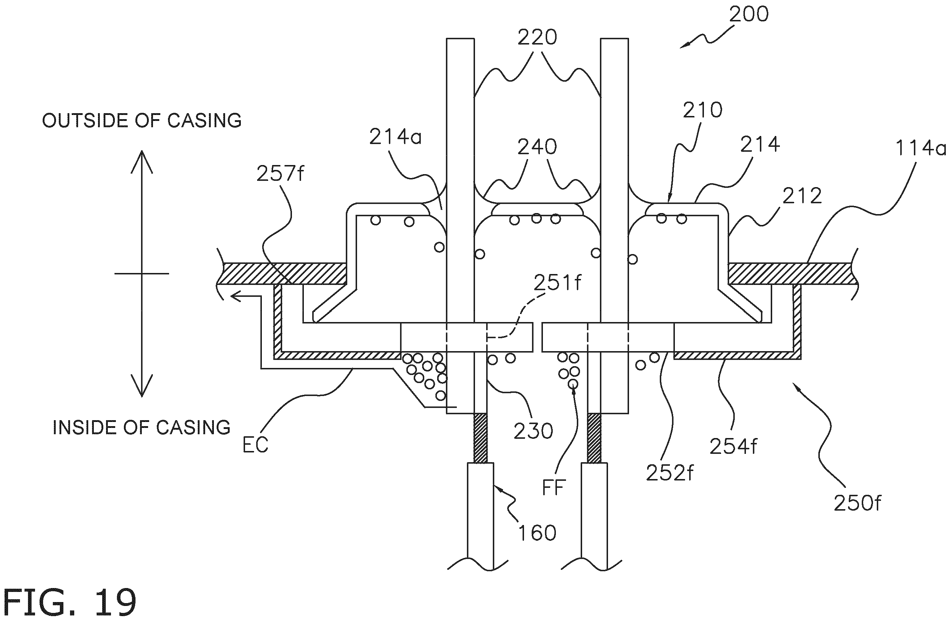

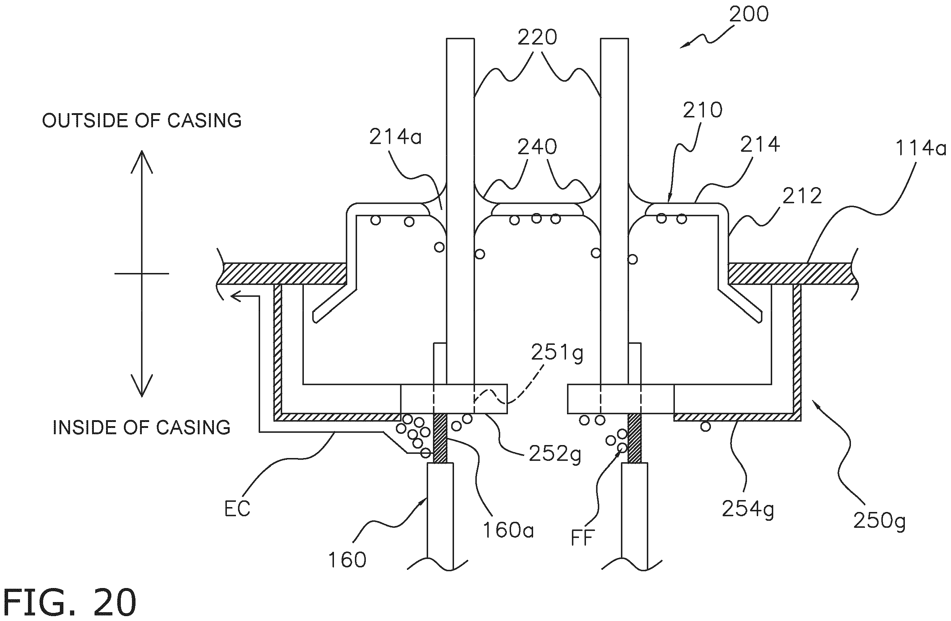

FIGS. 19 and 20 are sectional side views of a schematic structure of the terminal 200 according to the present modification. As shown in FIG. 19, the bridge member 250f is installed by inserting the terminal pins 220 into the holes 251f from the inside to the outside of the casing 110 such that an upper surface 252f faces the inside of the casing 110. The bridge member 250f is fixed to each terminal pin 220. The bridge member 250f is fixed such that the position of the conductor 254f is behind each terminal pin 220 when viewed from a center of the disk 214. However, the present disclosure is not limited to this configuration, and the bridge member 250f may be fixed such that the position of the conductor 254f is downstream of the refrigerant flow as viewed from each terminal pin 220. The bridge member 250f is fixed such that an end of the conductor 254f near a lower surface 257f is in contact with the upper lid 114a of the casing 110. In other words, the bridge member 250f that connects a part of the terminal pin 220 and a part of the casing 110 is provided between a part of the terminal pin 220 and a part of the casing 110 (the upper lid 114a).

The bridge member 250f is installed at a position where the abrasion powder FF is more likely to accumulate than the glass member 240. Therefore, when a predetermined amount or more of the abrasion powder FF generated at the sliding portion of the compression mechanism 130 adheres to the bridge member 250f, the electric path EC connecting a part of the terminal pin 220 and a part of the casing 110 is formed in the bridge member 250f before a short circuit occurs between the terminal pins 220 or the like. As a result, the current is grounded through the terminal pin 220, the abrasion powder FF, the conductor 254f, and the casing 110, and the breaker of the refrigeration cycle apparatus 1 including the compressor 100 trips, and thus, the compressor 100 can be stopped.

As shown in FIG. 20, a bridge member 250g having a changed size from the size of the bridge member 250f may be used as the bridge member. The bridge member 250g is installed such that a side surface near an upper surface 252g of the hole 251g is in contact with a core wire 160a of the lead wire 160. In other words, the bridge member 250g that connects a part of the lead wire 160 and a part of the casing 110 is provided between a part of the lead wire 160 (the core wire 160a) and a part of the casing 110 (upper lid 114a).

In this case, when a predetermined amount or more of the abrasion powder FF generated at the sliding portion of the compression mechanism 130 adheres to the bridge member 250g, the electric path EC connecting a part of the lead wire 160 and a part of the casing 110 is formed in the bridge member 250g before a short circuit occurs between the terminal pins 220 or the like. As a result, the current is grounded through the lead wire 160, the abrasion powder FF, the conductor 254g, and the casing 110, and the breaker of the refrigeration cycle apparatus 1 including the compressor 100 trips, and thus, the compressor 100 can be stopped.

### (6-5) Modification 1E

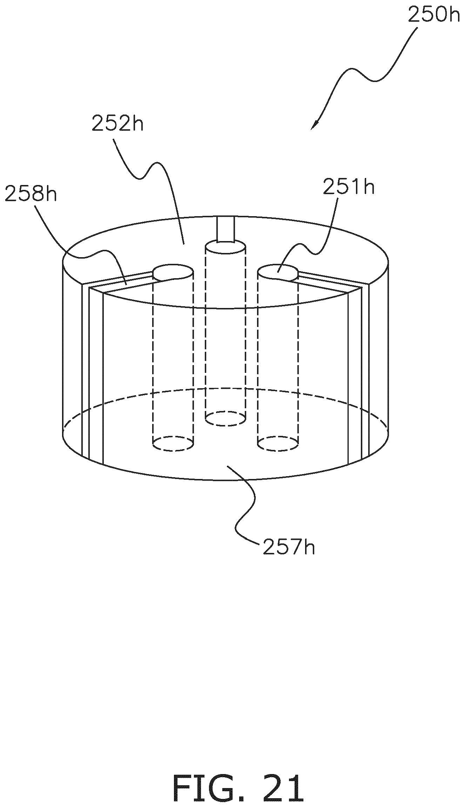

FIG. 21 is a schematic perspective view of a bridge member 250h according to the present modification. As the bridge member, the bridge member 250h may be used instead of the bridge member 250b. As shown in FIG. 21, instead of the conductor 254b in the bridge member 250b, the bridge member 250h has a groove 258h (holding structure) that collects the abrasion powder FF from a hole 251h of an upper surface 252h to a lower surface 257h.

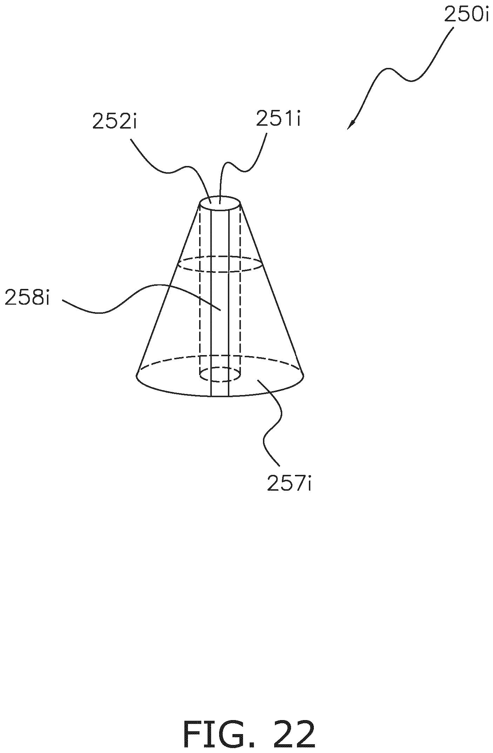

FIG. 22 is a schematic perspective view of a bridge member 250i according to the present modification. As the bridge member, the bridge member 250i may be used instead of the bridge member 250c. As shown in FIG. 22, instead of the conductor 254c in the bridge member 250c, the bridge member 250i has a groove 258i that collects the abrasion powder FF from an upper end 252i of a hole 251i to a lower surface 257i.

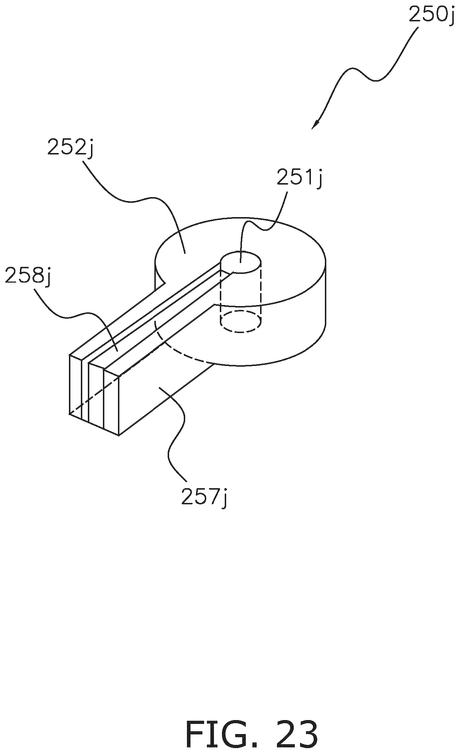

FIG. 23 is a schematic perspective view of a bridge member 250j according to the present modification. As the bridge member, the bridge member 250j may be used instead of the bridge member 250e. As shown in FIG. 23, instead of the conductor 254e in the bridge member 250e, the bridge member 250j has a groove 258j that collects the abrasion powder FF from a hole 251j of an upper surface 252j to a lower surface 257j.

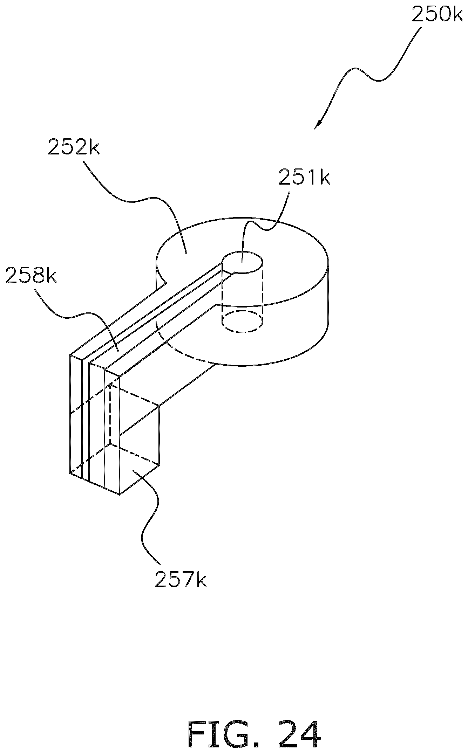

FIG. 24 is a schematic perspective view of a bridge member 250k according to the present modification. As the bridge member, the bridge member 250k may be used instead of the bridge member 250f. As shown in FIG. 24, instead of the conductor 254f in the bridge member 250f, the bridge member 250k has a groove 258k that collects the abrasion powder FF from a hole 251k of an upper surface 252k to a lower surface 257k.

The bridge members 250h to 250k have the grooves 258h to 258k that collect the abrasion powder FF. As a result, the compressor 100 can facilitate the formation of the electric path EC connecting the terminal pin 220 or a part of the lead wire 160 and a part of the casing 110 or the body 210 in 250h to 250k.

A magnet that collects the abrasion powder FF may be fixed to bottoms of the grooves 258h to 258k of the bridge members 250h to 250k. As a result, the compressor 100 can further facilitate the formation of the electric path EC connecting the terminal pin 220 or a part of the lead wire 160 and a part of the casing 110 or the body 210 in 250h to 250k.

### (6-6)

The embodiments of the present disclosure have been described above. It will be understood that various changes to modes and details can be made without departing from the gist and scope of the present disclosure recited in the claims.

### REFERENCE SIGNS LIST

1 refrigeration cycle apparatus
10 refrigerant circuit
100 compressor
110 casing
120 motor
130 compression mechanism
160 lead wire
200 terminal
210 body
220 terminal pin (conductive pin)
240 glass member
250a to 250k bridge member
251a to 251k hole
254a to 254g conductor
258h to 258k groove (holding structure)
EC electric path
FF abrasion powder

### CITATION LIST

### PATENT LITERATURE

Patent Literature 1: WO 2021/001921 A

## Claims

1. A compressor (100) comprising:
a compression mechanism (130) that is driven by a motor (120);
a casing (110) that seals the compression mechanism inside; and
a terminal (200) that is used for power supply and passes through a part of the casing,
wherein
the terminal includes a body (210), a conductive pin (220) to which a lead wire (160) extending from the motor is connected, and a glass member (240) that insulates and fixes the conductive pin to the body,
a bridge member (250a to 250k) that connects a first portion that is a part of the conductive pin or the lead wire and a second portion that is a part of the casing or the body of the terminal is provided between the first portion and the second portion, and
when a predetermined amount or more of abrasion powder (FF) generated at a sliding portion of the compression mechanism adheres to the bridge member, an electric path (EC) connecting the first portion and the second portion is formed in the bridge member.

2. The compressor (100) according to claim 1, wherein the bridge member is constituted by an insulating member.

3. The compressor (100) according to claim 1 or 2, wherein the bridge member is provided with a hole (251a to 251k) through which the conductive pin passes.

4. The compressor (100) according to any one of claims 1 to 3, wherein a conductor (254a to 254g) is fixed to a part of the bridge member away from the first portion.

5. The compressor (100) according to claim 4, wherein the conductor has magnetism.

6. The compressor (100) according to any one of claims 1 to 3, wherein the bridge member has a holding structure (258h to 258k) that collects the abrasion powder.

7. The compressor (100) according to claim 6, wherein a magnet that collects the abrasion powder is fixed to the bridge member.

8. The compressor (100) according to any one of claims 1 to 7, wherein a contact portion between the first portion and the bridge member is insulated.

9. The compressor (100) according to any one of claims 1 to 8, wherein the bridge member is installed at a position where the abrasion powder is more likely to be accumulated than the glass member.

10. The compressor (100) according to any one of claims 1 to 9, wherein a refrigerant compressed by the compression mechanism is categorized as slightly flammable in class 2L, flammable in class 2, or highly flammable in class 3 by ISO 817.

11. A refrigeration cycle apparatus (1) comprising a refrigerant circuit (10) including the compressor (100) according to any one of claims 1 to 10.
